# EUROPEAN PATENT SPECIFICATION

(11) **EP 2 495 204 B1**
(45) Date of publication and mention of the grant of the patent: **06.01.2016**
(21) Application number: 12156144.3
(22) Date of filing: 20.02.2012
(51) Int. Cl.: B65H 67/06, B65G 47/14

(54) **Bobbin isolating device and automatic winder**
Spulenisoliervorrichtung und automatischer Wickler
Dispositif d'isolation de bobine et enrouleur automatique

(30) Priority: 04.03.2011 JP 2011048100
(43) Date of publication of application: 05.09.2012
(73) Proprietor: Murata Machinery, Ltd., Kyoto-shi, Kyoto 601-8326 (JP)
(72) Inventor: Inoue, Kei, Kyoto, Kyoto 612-8686 (JP); Shimo, Hironobu, Kyoto, Kyoto 612-8686 (JP); Hasui, Keini, Kyoto, Kyoto 612-8686 (JP)
(74) Representative: Weickmann & Weickmann

(56) References cited:
- EP-A1- 0 298 535
- DE-A1- 2 149 573
- DE-A1- 3 233 658
- DE-U1- 9 205 053
- JP-A- 2009 001 349
- JP-U- S63 162 772
- US-A- 2 615 566
- US-A- 3 468 407
- US-A- 4 099 609

## Description

### BACKGROUND OF THE INVENTION

### 1. Field of the Invention

The present invention relates to a bobbin isolating device that isolates bobbins one by one that are supplied randomly.

### 2. Description of the Related Art

Devices that isolate bobbins one by one that are supplied randomly are known in the art.

A device disclosed in Japanese Patent Application Laid-open No. S58-104875 isolates bobbins (cops) supplied in a disorderly fashion and then aligns the isolated bobbins. This device includes a lifting machine that picks up the bobbins one by one and transports them to the next process.

A device disclosed in Japanese Patent Application Laid-open No. H6-227747 picks up and transfers one bobbin at a time from a cluster of bobbins (tubes). This device includes a steeply sloping conveyor for transporting the bobbins. Because of the slope of the conveyor, extra bobbins fall off the edge of the conveyor. In this manner, the bobbins are transferred one by one with certainty.

A structure disclosed in Japanese Patent Application Laid-open No. S60-232374 includes a feeler that moves to and fro and drops bobbins with a yarn wound thereon from an elevator. In this way, the bobbins that are unfit for use are eliminated with certainty.

In the device disclosed in Japanese Patent Application Laid-open No. S58-104875, to transfer the bobbins one by one to the lifting machine, a conveyor, a flap, a pivoting member, etc., have to be operated in a coordinated manner, which makes the device complex and bulky.

In the device disclosed in Japanese Patent Application Laid-open No. H6-227747, no complex mechanisms (the conveyor, the flap, the pivoting member, etc., mentioned in Japanese Patent Application Laid-open No. S58-104875) are required for transferring the bobbins one by one to the conveyor as the extra bobbins fall off the conveyor on their own. However, empty bobbins with no yarn wound thereon are the target for transfer in the device disclosed in Japanese Patent Application Laid-open No. H6-227747. Such empty bobbins have unvarying form and center of gravity, and therefore, a structure such as the one disclosed in Japanese Patent Application Laid-open No. H6-227747, whereby the bobbins fall off the edge of the conveyor because of the slope can be used for isolating the bobbins one by one. Whereas, yarn-wound bobbins have varying shapes and centers of gravity. Consequently, isolating the yarn-wound bobbins one by one using the structure disclosed in Japanese Patent Application Laid-open No. H6-227747 would be difficult.

In the structure disclosed in Japanese Patent Application Laid-open No. S60-232374, a driving mechanism that has a complicated structure is required for driving the feeler. Furthermore, the elevator needs to be stopped when moving the feeler. Consequently, a longer time is required to transport the bobbins.

JP S63-162772U discloses a bobbin isolating device according to the preamble of claim 1.

### SUMMARY OF THE INVENTION

The present invention has been made in view of the problems described above, and it is an object of the present invention to provide a bobbin isolating device having a simple structure for isolating bobbins.

According to an aspect of the present invention, a bobbin isolating device includes a bobbin introduction section that receives a plurality of bobbins; and a bobbin picking section that picks up the bobbin from a pile of the bobbins introduced into the bobbin introduction section. The bobbin picking section includes a plurality of bobbin receiving members on which the bobbins can ride, a bobbin-receiving-member driving section that drives the bobbin receiving members in a substantially perpendicular direction relative to an installation surface of the bobbin introduction section, and a bobbin isolating member that is arranged along an area over which the bobbin receiving members with the bobbins riding thereon are driven, and that isolates the bobbins riding on the bobbin receiving members.

The bobbin isolating member can come into contact with a bobbin riding on the bobbin receiving member from a side of the bobbin receiving member that is opposite to a scooping side of the bobbin receiving member, and the bobbin isolating member has a pushing portion that is convex toward the scooping side of the bobbin receiving member, and restricts number of bobbins that can ride on the bobbin receiving member with the pushing portion, so that if two or more bobbins riding one on top of another on a bobbin receiving member reach the position of the pushing portion, the bobbins are pushed toward the scooping side of the bobbin receiving member so that an extra bobbin is dropped from the bobbin receiving member and the number of the bobbins that can ride on the bobbin receiving member is restricted to one.

The above and other objects, features, advantages and the technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a cross-sectional front view of a bobbin isolating device according to an embodiment of the present invention;
FIG. 2 is a perspective view of the bobbin isolating device shown in FIG. 1;
FIG. 3 is a perspective view of a bobbin picking section shown in FIG. 2;
FIG. 4 is an enlarged cross-sectional side view of a portion of the bobbin picking section;
FIG. 5 is an enlarged perspective view of a portion of the bobbin picking section;
FIG. 6 is a plan view of the bobbin isolating device shown in FIG. 1;
FIG. 7 is a perspective view of a pivoting member shown in FIG. 6;
FIG. 8 is a cross-sectional front view of the bobbin isolating device shown in FIG. 1 in a state in which a transporting plate faces a reservoir member;
FIG. 9 is a cross-sectional front view of the bobbin isolating device shown in FIG. 1 in a state in which the bobbins are being transported by the transporting plate to a guiding unit;
FIG. 10 is an enlarged cross-sectional side view of the bobbin picking section showing a state in which the bobbins are isolated based on an amount of yarn wound on the bobbin; and
FIG. 11 is an enlarged cross-sectional side view of the bobbin picking section according to another embodiment of the present invention.

### DETAILED DESCRIPTION OF THE PREFERRED EMBODIMENTS

Exemplary embodiments of the present invention are explained below with reference to the accompanying drawings. An automatic winder 10 according to an embodiment of the present invention includes a plurality of not shown winder units, a bobbin transporting device 11, and a bobbin isolating device 12.

The winder unit unwinds a spun yarn wound on a bobbin 9, and rewinds it on a winding bobbin to produce a package.

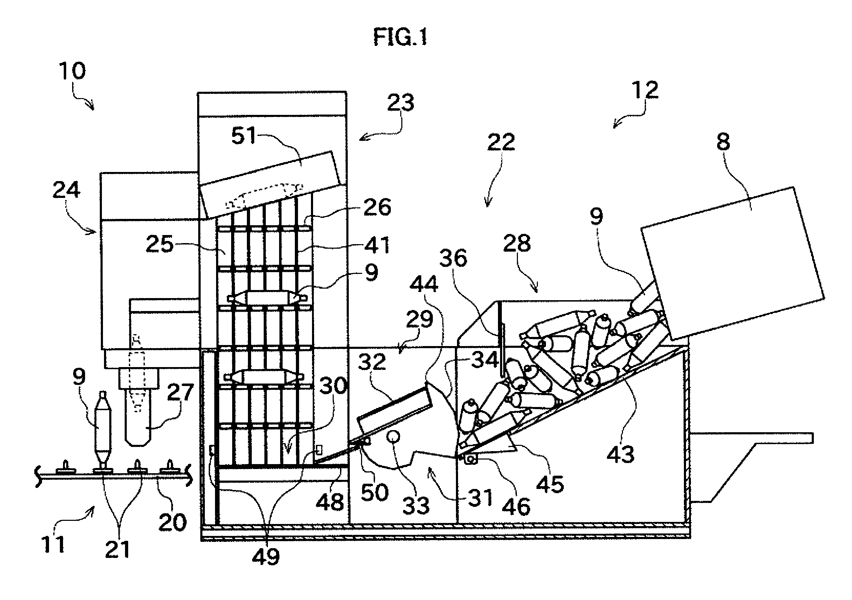

The bobbin transporting device 11 includes a bobbin transport path 20, such as, a conveyor, and several transporting trays 21 that are transported over the bobbin transport path 20. As shown in FIG. 1, the bobbin 9 is arranged in a substantially upright posture on the transporting tray 21. The bobbin transport path 20 transports the transporting trays 21 with the bobbins 9 riding thereon to each of the not shown winder units. In this manner, the bobbins 9 are delivered automatically to each of the winder units.

A yarn has been wound on the bobbin 9. A spinning machine or the like is used to wind the yarn on the bobbin 9. The bobbins 9 prepared by the spinning machine are put into a container 8 or the like, and transported up to the automatic winder 10. Tremendous workload will be put on an operator if the operator is to do the job of loading the bobbins 9 one by one from the container 8 to the transporting trays 21. To solve this issue, the bobbin isolating device 12 according to the present embodiment separates (isolates) the bobbins 9 one by one and loads the separated bobbin 9 on each of the transporting trays 21.

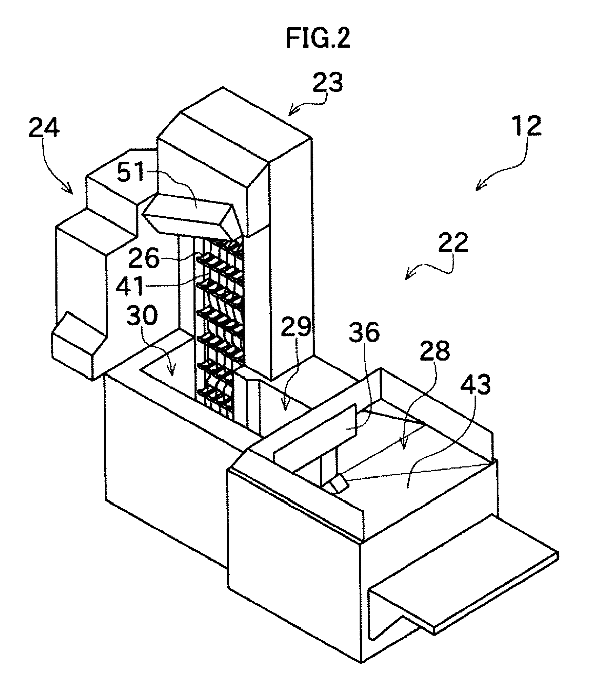

As shown in FIGS. 1 and 2, the bobbin isolating device 12 according to the present embodiment includes a bobbin introduction section 22, a bobbin picking section 23, and a tray placement section 24.

The bobbins 9 in the container 8 are introduced into the bobbin introduction section 22. The bobbin picking section 23 isolates the bobbins 9 by picking the bobbins 9 one by one from a pile of the bobbins 9 introduced into the bobbin introduction section 22.

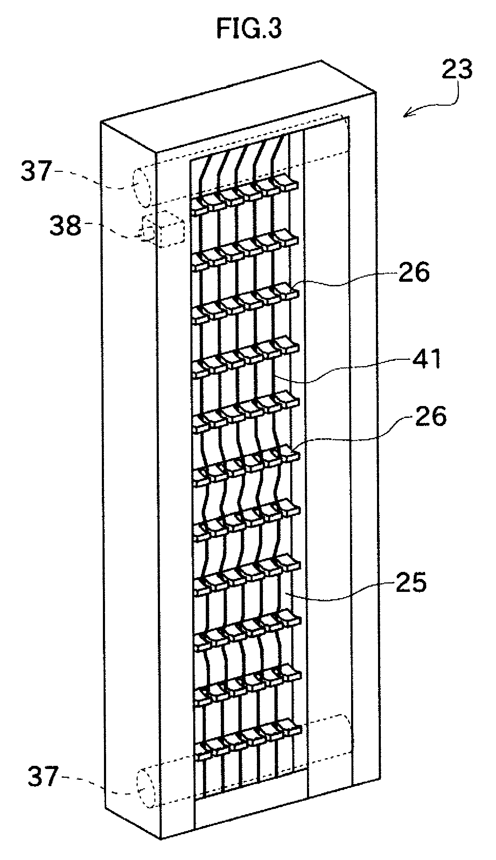

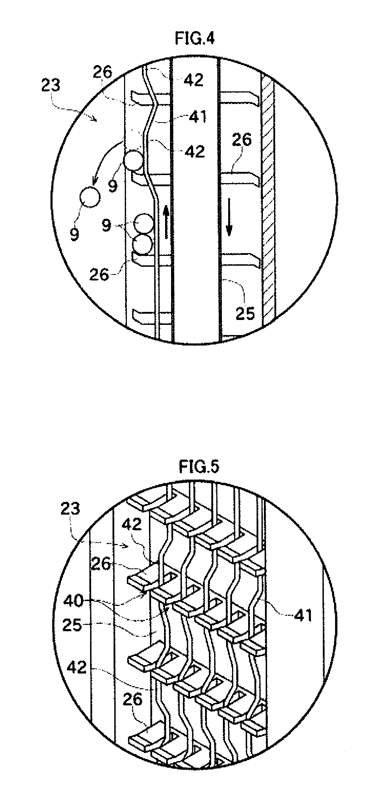

The bobbin picking section 23 has a structure of a conveyor that is arranged vertically. Specifically, as shown in FIGS. 3 and 4, the bobbin picking section 23 includes an endless loop belt 25, and a plurality of bobbin plates (bobbin receiving members) 26. The bobbin plates 26 are arranged on an outer periphery of the endless loop belt 25 at substantially equal intervals in a longitudinal direction of the endless loop belt 25.

The endless loop belt (bobbin-receiving-member driving section) 25 is a band-like (sheet-like) member stretched across upper and lower rotary rollers 37 and 37 to form a loop. Rotation axes of the rotary rollers 37 and 37 are parallel to each other. The upper rotary roller 37 is driven to rotate by a driving source 38. In the present embodiment, the driving source 38 is a stepping motor. The rotations of an output shaft of the stepping motor are transmitted to the rotary roller 37 via a transmission belt or the like. When the endless loop belt 25 is driven to rotate, the bobbin plates 26 that are attached to the endless loop belt 25 travel in the vertical direction.

An endless chain, for example, can be considered as an alternative to the endless loop belt 25. However, the bobbin plates 26 are more stably supported when attached to the endless loop belt 25 as compared with the case where the bobbin plates are attached to the endless chain. The endless loop belt 25 runs up against the edge of the bobbin plate 26 that is on a back side of the device. Consequently, the bobbins 9 riding on the bobbin plates 26 do not fall off on the back side of the device.

When the endless loop belt 25 halts, for example, due to the bobbins 9 jamming in the bobbin picking section 23, the stepping motor appropriately loses steps. Using the stepping motor as the driving source 38 of the endless loop belt 25 is advantageous; because, with a simple structure that does not require a clutch, and the like, damage to the motor or the device can be prevented. Meanwhile, in the present embodiment, a sensor that detects jamming of the bobbins 9 in the bobbin picking section 23 is arranged. Specifically, a sensor is arranged to detect the passage of the bobbin plate 26, and in spite of application of a voltage on the driving source 38, if this sensor does not detect passage of the bobbin plate 26 for a given duration, it is judged that jamming of the bobbins 9 has occurred in the bobbin picking section 23 and that the endless loop belt 25 has stopped. In the present embodiment, upon detecting jamming of the bobbins 9 in the bobbin picking section 23, a control is exerted for a predetermined time to drive the driving source 38 in a reverse direction. Alternatively, a driving speed of the driving source 38 can be varied. This increases the possibility of automatically breaking up the jamming of the bobbins 9, and restoring transport of the bobbins 9 by the bobbin picking section 23 to normal. Using the stepping motor as the driving source 38 makes it possible to easily accomplish the process of driving the driving source 38 in the reverse direction as mentioned above. Thus, by using the stepping motor as the driving source 38, prevention of damage to the motor due to jamming of the bobbins 9, exertion of control to break up jamming of the bobbins 9 by reverse rotation of the motor, etc., can be easily and inexpensively accomplished without having to use an inverter, and the like.

The bobbin plate 26 has a rectangular top surface (as shown in FIG. 5, slits 40 are formed in the rectangular bobbin plate 26; this will be explained in further detail later) so that the bobbin 9 can ride on the bobbin plate 26. The rectangular bobbin plate 26 is attached to the endless loop belt 25 in such a way that a longitudinal direction of the bobbin plate 26 is parallel to the direction of the rotation axes of the rotary rollers 37. With this, the bobbin 9 can ride on the bobbin plate 26 in a direction parallel to the rotation axes of the rotary rollers 37. A width of the bobbin plate 26 in an orthogonal direction to the longitudinal direction of the bobbin plate 26 is such that two bobbins 9 cannot ride side by side on the bobbin plate 26. With this structure, just one bobbin 9 among the bobbins 9 in the bobbin introduction section 22 can ride on each of the bobbin plates 26, and transported upward, in a perpendicular direction relative to an installation surface of the device by the loop driving of the endless loop belt 25. In this manner, the bobbins 9 are picked up (isolated) one by one from the pile of the bobbins 9 in the bobbin introduction section 22.

A device for isolating bobbins is disclosed in Japanese Patent Application Laid-open No. H8-337317. In a cop (bobbin) delivering device disclosed in Japanese Patent Application Laid-open No. H8-337317, the cops are isolated by using a feeder bowl. This structure requires more space in the horizontal direction. On the other hand, the bobbin picking section 23 of the bobbin isolating device 12 according to the present embodiment isolates the bobbins 9 by transporting the bobbins 9 vertically and hence requires less space in the horizontal direction. Consequently, the bobbin isolating device 12 is more compact compared with the conventional structure.

Furthermore, in the cop delivering device disclosed in Japanese Patent Application Laid-open No. H8-337317, the bobbins are isolated while dropping the bobbins from a height. Therefore, the position where an unloading device that unloads the bobbins has to be at a position that is elevated above the installation surface, leading to less than ideal visibility and operability. On the other hand, in the bobbin isolating device 12 according to the present embodiment, the bobbins 9 are isolated by transporting them upward; therefore the position from where the bobbins 9 are introduced can be set lower, leading to greatly improved visibility and operability.

The bobbin 9 that is transported upward by the bobbin picking section 23 is supplied to the tray placement section 24. The tray placement section 24 makes a distinction of an unwinding end and a supporting end of the bobbin 9 received from the bobbin picking section 23, rotates the bobbin 9 so that the supporting end faces downward, and drops the bobbin 9 from a bobbin chute 27. The transporting tray 21 is waiting below the bobbin chute 27 to receive the bobbin 9 from the bobbin chute 27. Such tray placement sections are known in the art, for example, one is disclosed in Japanese Patent Application Laid-open No. H8-169525, and therefore, a detailed explanation of the tray placement section is omitted herefrom.

As described above, in the bobbin isolating device 12 according to the present embodiment, the bobbins 9 are picked up by scooping them up one by one from the pile of the bobbins 9 in the bobbin introduction section 22 by a scooping side (the side opposite to the side that is attached to the endless loop belt 25) of the bobbin plate 26. The isolated bobbin 9 is then transported to and placed on the transporting tray 21.

A situation has been explained above where a single bobbin 9 is carried on each of the bobbin plates 26. In actuality, it is possible that two or more bobbins 9 are riding on the bobbin plate 26 one on top of another.

In view of this, the bobbin isolating device 12 according to the present embodiment includes bobbin isolating members 41 that can make contact with the bobbin 9 that is being transported on the bobbin plate 26. The bobbin isolating member 41 is a metal wire (wire member) arranged along an area in the transport direction of the bobbin 9 by the bobbin plates 26. As shown in FIG. 5, the bobbin plates 26 have the slits 40 along the width direction, and the bobbin isolating members 41 pass through the slits 40. A plurality of the slits 40 is formed in the bobbin plates 26 in the longitudinal direction of the bobbin plates 26, and the bobbin isolating members 41 are arranged in each of the slits 40. With this structure, the bobbin isolating members 41 come into contact with the bobbin 9 that is riding on the bobbin plate 26 from the side of the endless loop belt 25 (from the opposite direction of the scooping side of the bobbin plate 26) in the width direction of the bobbin plate 26.

Each of the bobbin isolating members 41 has a bend in a plane orthogonal to the longitudinal direction of the bobbin plate 26 (parallel to the paper on which FIG. 4 is printed). More specifically, the bobbin isolating members 41 have pushing portions 42 that are convex toward the scooping side of the bobbin plate 26. Due to this structure, when the bobbins 9, which are being transported one above the other, reach the position of any of the pushing portions 42, the bobbin isolating members 41 push the bobbins 9 toward the scooping side of the bobbin plate 26. In this manner, if an extra bobbin 9 is riding on the bobbin plate 26, the extra bobbin 9 is dropped from the bobbin plate 26 by pushing the bobbin 9 toward the scooping side of the bobbin plate 26. That is, the number of the bobbins 9 that can ride on one bobbin plate 26 can be restricted to one.

For example, as shown in FIG. 4, when the bobbin plate 26 carrying two bobbins 9 one on top of another reaches the position of the pushing portion 42, the bobbin isolating members 41 push the bobbins 9, causing the bobbins 9 to lose their balance. Consequently, the bobbin 9 that is riding on the top falls off the scooping side of the bobbin plate 26. In this manner, the extra bobbin 9 riding on the bobbin plate 26 is dropped from the bobbin plate 26 with a simple structure of the bobbin isolating member 41 including the pushing portion 42 along the transport direction of the bobbin 9. That is, the number of the bobbins 9 that can be carried on one bobbin plate 26 can be restricted to one, and therefore, the bobbins 9 can be isolated without fail. Meanwhile, each of the bobbin isolating members 41 has a plurality of the pushing portions 42 in the direction in which the bobbin 9 is transported by the bobbin plate 26 (at four places in the present embodiment). With this structure, loss of balance of the bobbins 9 can be realized at a plurality of places, and therefore, the bobbins 9 can be isolated more definitively.

If the bobbins 9 introduced into the bobbin introduction section 22 are supplied to the bobbin picking section 23 all at once, the bobbin picking section 23 may have difficulty in picking up the bobbins 9 one by one. In view of this, the bobbin isolating device 12 is configured so that a smaller number of the bobbins 9 are divided from the pile of the bobbins 9 introduced into the bobbin introduction section 22 and the smaller number of the bobbins 9 are supplied to the bobbin picking section 23.

Specifically, as shown in FIGS. 1, 2, and 6, the bobbin introduction section 22 includes a reservoir member 28, a fixed-number transporting member 29, and a guiding member 30. The reservoir member 28 and the guiding member 30 communicate with each other. The fixed-number transporting member 29 is arranged between the reservoir member 28 and the guiding member 30.

The bobbins 9 transported from the spinning machine or the like in the container 8 are introduced into the reservoir member 28. As shown in FIG. 1, a bottom surface 43 of the reservoir member 28 is inclined downward toward the guiding member 30. Such inclination facilitates the bobbins 9 in the reservoir member 28 to slide down toward the guiding member 30.

The fixed-number transporting member 29 includes a pivoting member 31. As shown in FIG. 1, the pivoting member 31 holds back the bobbins 9 so that the bobbins 9 do not rush into the guiding member 30 from the reservoir member 28. In this manner, because the bobbins 9 are temporarily held in the reservoir member 28, rushing of a large number of the bobbins 9 all at once into the guiding member 30 can be prevented.

A structure of the fixed-number transporting member 29 is explained in detail below.

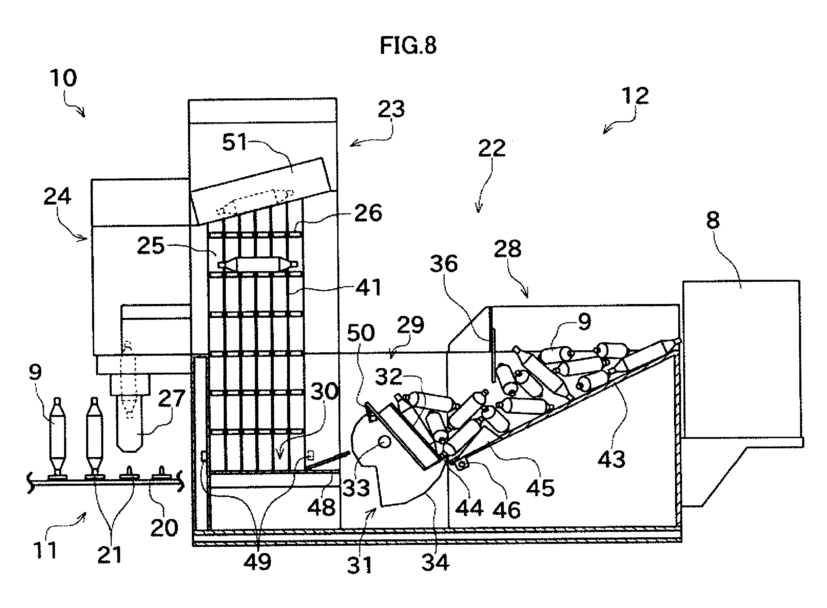

The pivoting member 31 is pivotable about a pivot shaft 33. The pivoting member 31 has a transporting plate 32 arranged on a top surface thereof. The fixed-number transporting member 29 includes a not shown driving source (for example, a pneumatic cylinder) for driving the pivoting member 31 to pivot. The driving source drives the pivoting member 31 to pivot and assume a posture in which an upper surface of the transporting plate 32 faces the guiding member 30 (the state shown in FIG. 1) or a posture in which the upper surface of the transporting plate 32 faces the reservoir member 28 (the state shown in FIG. 8).

When the pivoting member 31 assumes the posture in which the upper surface of the transporting plate 32 faces the guiding member 30 (the state shown in FIG. 1), the bobbins 9 in the reservoir member 28 are held back from rushing into the guiding member 30. More specifically, the pivoting member 31 includes a flow stopping wall 34. The flow stopping wall 34 extends downward from near an end of the transporting plate 32 toward the reservoir member 28, and is a part of an outer periphery of a cylinder that is coaxial with the pivot shaft 33. Meanwhile, the flow stopping wall 34 faces the reservoir member 28. In this structure, as the pivoting member 31 pivots about the pivot shaft 33, the flow stopping wall 34 appears or disappears. The bobbins 9 that would have otherwise rushed into the guiding member 30 due to the inclination of the bottom surface 43 of the reservoir member 28 are held back when these bobbins 9 come into contact with the appeared flow stopping wall 34.

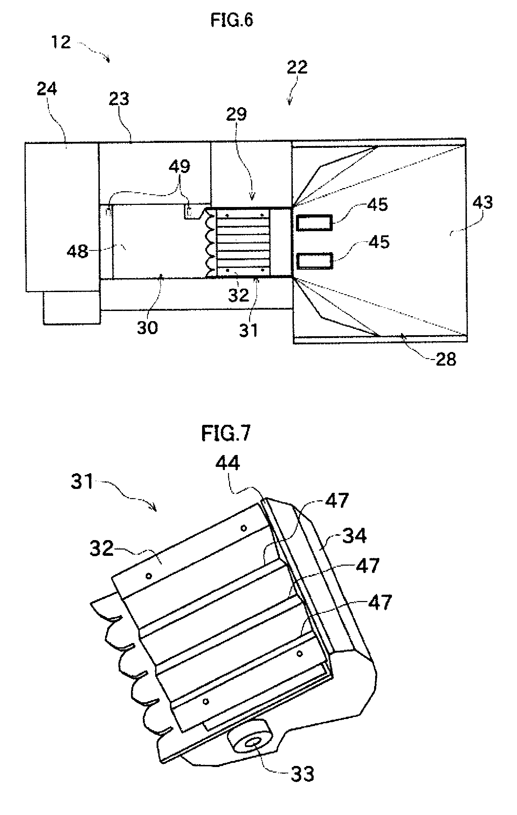

The reservoir member 28 includes a height limiting plate 36 that limits a height of a path of the bobbins 9 from the reservoir member 28 to the fixed-number transporting member 29. The height of the path is adjusted appropriately with the height limiting plate 36 so that the bobbins 9 in the reservoir member 28 do not pass over the flow stopping wall 34 and rush into the guiding member 30. Furthermore, as shown in FIG. 6, the reservoir member 28 is formed such that a width of the path of the bobbins 9 toward the fixed-number transporting member 29 (that is, a width in the front-back direction of the device) gradually narrows. Because the path of the bobbins 9 toward the fixed-number transporting member 29 gradually narrows, a relatively small flow stopping wall 34 is sufficient to hold back a large number of the bobbins 9 in the reservoir member 28. Consequently, a compact pivoting member 31 is realized.

How the bobbins 9 in the reservoir member 28 are transported by the fixed-number transporting member 29 to the guiding member 30 is explained below. At the time of transporting the bobbins 9 toward the guiding member 30, the fixed-number transporting member 29 causes the pivoting member 31 to pivot so that the upper surface of the transporting plate 32 faces the reservoir member 28 (as shown in FIG. 8). Consequently, the bobbins 9 that were held back by the flow stopping wall 34 come into contact with the upper surface of the transporting plate 32.

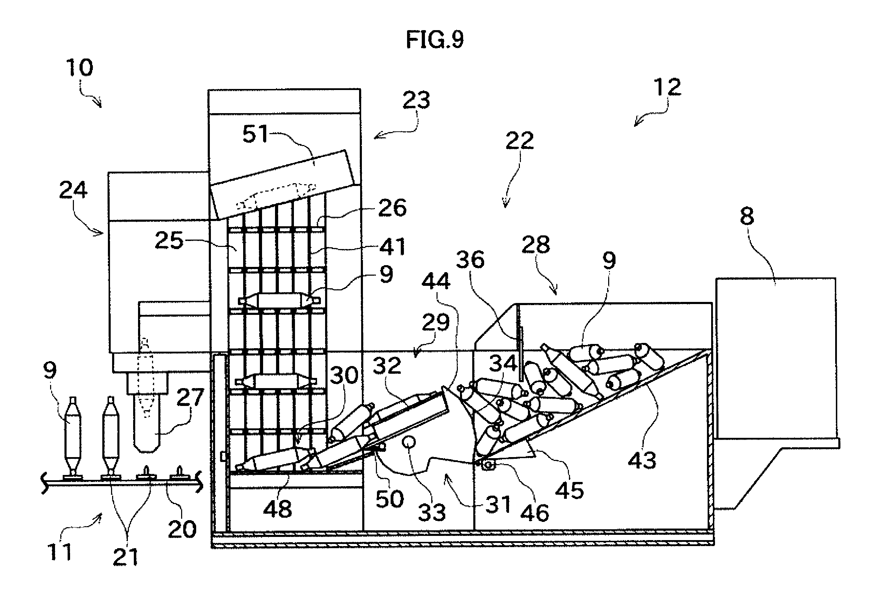

In this state, the pivoting member 31 of the fixed-number transporting member 29 is pivoted again so that the upper surface of the transporting plate 32 now faces the guiding member 30 (as shown in FIG. 9). Consequently, because the pivoting member 31 pivots with a certain number of the bobbins 9 riding on the transporting plate 32, only the bobbins 9 riding on the transporting plate 32 are delivered to the guiding member 30. Consequently, with a simple structure that involves merely pivoting the pivoting member 31, a predetermined small number of the bobbins 9 can be divided from a large number of the bobbins 9 present in the reservoir member 28 and transported to the guiding member 30.

Furthermore, the pivoting member 31 has a projecting portion 44 at the end of the transporting plate 32 toward the reservoir member 28. The projecting portion 44 projects above the upper surface of the transporting plate 32 and prevents the bobbins 9 riding on the upper surface of the transporting plate 32 from sliding back into the reservoir member 28. Therefore, when transporting the bobbins 9 by causing the pivoting member 31 to pivot, the bobbins 9 riding on the transporting plate 32 are definitively dispatched to the guiding member 30. As a result, the number of the bobbins 9 transported by the fixed-number transporting member 29 can be stabilized.

As mentioned above, because of the narrowed path of flow of the bobbins 9 from the reservoir member 28 to the fixed-number transporting member 29, the large number of the bobbins 9 in the reservoir member 28 can be easily divided into a smaller number.

However, because of the narrowed path of flow of the bobbins 9 from the reservoir member 28 to the fixed-number transporting member 29, there is a possibility that the bobbins 9 may get jammed in the path. In view of this, a bobbin jam-breaking member 45 is arranged on the bottom surface 43 of the reservoir member 28 below the height limiting plate 36. The bobbin jam-breaking member 45 pivots about a pivot shaft 46 to assume a posture of being at the same level as that of the upper surface of the bottom surface 43 (the state shown in FIGS. 1 and 9) or a posture of jutting out above the bottom surface 43 (the state shown in FIG. 8). The reservoir member 28 includes a not shown driving source (for example, a pneumatic cylinder) for driving the bobbin jam-breaking member 45 to pivot.

The pivot shaft 46 of the bobbin jam-breaking member 45 is arranged toward a lower end of the bobbin jam-breaking member 45. Due to this structure, when the bobbin jam-breaking member 45 is pivoted about the pivot shaft 46 and made to jut out above the bottom surface 43, an upper surface of the bobbin jam-breaking member 45 imparts an impact that pushes the bobbins 9 in the reservoir member 28 toward a bottom end of the inclined bottom surface 43 (that is, toward the fixed-number transporting member 29). Consequently, even if there is jamming of the bobbins 9 that are headed toward the fixed-number transporting member 29, the jamming can be broken up.

As shown in FIG. 7, the transporting plate 32 is folded to have accordion-like folds. A plurality of parallel wave-shaped furrows 47 is formed on the upper surface of the transporting plate 32 by the folding. Due to this structure, the bobbins 9 riding on the transporting plate 32 are caught in the furrows 47 with a longitudinal direction thereof in alignment with a longitudinal direction of the furrows 47. Therefore, the orientation of the bobbins 9 in the longitudinal direction can be easily aligned by virtue of the parallel furrows 47 on the upper surface of the transporting plate 32.

As explained above, in the structure according to the present embodiment, the large number of the bobbins 9 can be divided into a predetermined smaller number of the bobbins 9 and only the smaller number of the bobbins 9 can be transported to the guiding member 30. Therefore, because no conveyor needs to be arranged horizontally to divide the pile of bobbins as disclosed in Japanese Patent Application Laid-open No. S58-104875, the installation space of the bobbin isolating device 12 can be made more compact.

The guiding member 30 is explained below. The guiding member 30 guides the bobbins 9 that are transported by the fixed-number transporting member 29 to the bobbin picking section 23.

More specifically, a side wall of the guiding member 30 on the back side of the device (a side wall on an upper side in FIG. 6) is open, allowing the guiding member 30 to communicate with the conveyor (a space in which the endless loop belt 25 and the bobbin plate 26 are arranged) of the bobbin picking section 23. A bottom surface 48 of the guiding member 30 is inclined downward toward the bobbin picking section 23. The inclination facilitates the bobbins 9 transported by the fixed-number transporting member 29 to the guiding member 30 to crowd toward the bobbin picking section 23. Accordingly, the bottom surface 48 of the guiding member 30 can also be called a bobbin gathering member.

The bobbins 9 crowding toward the bobbin picking section 23 due to the inclination of the bottom surface 48 are picked up one by one by the bobbin plates 26 of the bobbin picking section 23. In this manner, the bobbins 9 are transported upward, in a perpendicular direction relative to the installation surface of the device. That is, the bobbins 9 are isolated.

The guiding member 30 includes a bobbin sensor (detecting section) 49. Specifically, the bobbin sensor 49 is a non-contact type sensor that detects presence or absence of the bobbins 9 in the side wall portion (that opens to the conveyor of the bobbin picking section 23) of the guiding member 30 that opens into the bobbin picking section 23. The pivoting member 31 of the bobbin isolating device 12 is made to pivot based on an output of the bobbin sensor 49.

That is, when the bobbin sensor 49 detects the presence of the bobbins 9, it means that the guiding member 30 already contains the bobbins 9, so that the pivoting member 31 is controlled to assume the posture in which the upper surface of the transporting plate 32 faces the guiding member 30 whereby the bobbins 9 in the reservoir member 28 are prevented from rushing into the guiding member 30. On the other hand, when the bobbin sensor 49 detects absence of the bobbins 9, it means that there is no bobbin 9 in the guiding member 30, so that the predetermined number of the bobbins 9 is transported by the fixed-number transporting member 29 to the guiding member 30. More specifically, when the bobbin sensor 49 detects absence of the bobbins 9, the pivoting member 31 is pivoted so that the upper surface of the transporting plate 32 faces the reservoir member 28 to allow the bobbins 9 to ride on the transporting plate 32 after which once again the pivoting member 31 is pivoted so that the upper surface of the transporting plate 32 faces the guiding member 30. In this manner, the predetermined number of the bobbins 9 is transported to the guiding member 30.

As explained above, the number of the bobbins 9 inside the guiding member 30 can be always maintained to be within a predetermined range by controlling the driving of the pivoting member 31 based on the output of the bobbin sensor 49 arranged inside the guiding member 30. Consequently, the bobbins 9 in the guiding member 30 can be properly picked up by the bobbin picking section 23.

The furrows 47 on the upper surface of the transporting plate 32 are formed such that their longitudinal direction is parallel to a longitudinal direction of the bobbin plate 26. Therefore, when the bobbins 9 riding on the transporting plate 32 are being transported to the guiding member 30, the bobbins 9 are oriented such that their longitudinal directions are parallel to the longitudinal direction of the bobbin plates 26 due to the bobbins 9 being caught in the furrows 47. Therefore, when the bobbins 9 crowd toward the bobbin picking section 23 due to the inclination of the bottom surface 48 of the guiding member 30, there is a higher possibility that the longitudinal directions of the bobbins 9 are aligned with the longitudinal direction of the bobbin plates 26. Consequently, the bobbins 9 in the guiding member 30 can be easily picked up with the bobbin plates 26.

All the bobbins 9 may not be guided into the bobbin picking section 23 with the longitudinal directions thereof in alignment with the longitudinal direction of the bobbin plate 26. Those bobbins 9 with their longitudinal directions tilted relative to the longitudinal direction of the bobbin plate 26 may not properly ride on the bobbin plate 26 and fall off the bobbin plate 26. However, because the orientation of the bobbin 9 changes when the bobbin 9 falls, there is a possibility that the bobbin 9 may ride on the bobbin plate 26 when the bobbin 9 crowds once again toward the bobbin picking section 23 due to the inclination of the bottom surface 48 of the guiding member 30. In this manner, the bobbins 9 that fall off without riding on the bobbin plate 26 keep crowding again and again toward the bobbin picking section 23 due to the inclination of the bottom surface 48 of the guiding member 30. Because the orientation of the bobbin 9 changes at every fall, eventually the bobbin 9 does ride on the bobbin plate 26.

As explained above, the bobbin plates 26 cause the orientation of the bobbins 9 in the guiding member 30 to keep changing. That is, the bobbin plates 26 stir up the bobbins 9 in the guiding member 30. However, due to such stirring, the yarn on the bobbins 9 may come out (causing webbing) and easily get entangled with the yarns of the other bobbins 9. If the yarns of the bobbins 9 get entangled with each other, the bobbin picking section 23 cannot properly isolate the bobbins 9. In view of this, in the present embodiment, as shown in FIG. 1, a cutter 50 for cutting the yarn is arranged at the end of the pivoting member 31 toward the guiding member 30. The cutter 50 is a scissor-like member and is driven by a not shown driving source to cut the yarn coming out of the bobbins 9. The cutter 50 cuts any yarn that is coming out of the bobbins 9 before the bobbins 9 are transported from the fixed-number transporting member 29 to the guiding member 30. More specifically, to prevent the entangling of the yarns of the yarn supplying bobbins 9, the yarns that have come out of the yarn supplying bobbins 9 are cut at the end of the furrows 47 by the cutter 50 when the yarn supplying bobbins 9 move from the pivoting member 31 toward the guiding member 30. The cutter 50 is arranged for each of the furrows 47. Therefore, the yarns that have come out of the yarn supplying bobbins 9 caught and transported in the furrows 47 are guided toward the cutter 50. The yarns coming out of the yarn supplying bobbins 9 can be effectively cut by arranging the cutter 50 in this manner. Therefore, even if the bobbins 9 are stirred up by the bobbin plates 26, entangling of the yarns can be prevented, and the bobbins 9 can be isolated properly.

Moreover, not necessarily all the bobbin plates 26 carry the bobbin 9 (that is, some bobbin plates 26 can remain empty). This can lead to a situation where no bobbin 9 is delivered to the tray placement section 24 from the bobbin picking section 23. When no bobbin 9 is delivered to the transporting tray 21 from the tray placement section 24, the corresponding tray placement section 24 will unnecessarily lie idle. In view of this, in the present embodiment, a bobbin buffer member (stocking member) 51 that temporarily stocks the bobbin 9 is arranged between the bobbin picking section 23 and the tray placement section 24. The bobbin 9 stocked in the bobbin buffer member 51 is delivered to the tray placement section 24 when no bobbin 9 is riding on the bobbin plate 26. With this structure, the tray placement section 24 can be prevented from lying idle, and an efficiency of the device can be improved.

As explained above, the bobbin isolating device 12 according to the present embodiment includes the bobbin introduction section 22 into which the bobbins 9 are introduced, and the bobbin picking section 23 that picks up the bobbin 9 from the pile of the bobbins 9 introduced into the bobbin introduction section 22. The bobbin picking section 23 includes the bobbin plates 26, the endless loop belt 25, and the bobbin isolating member 41. The bobbin 9 rides on the bobbin plate 26. The endless loop belt 25 drives the bobbin plate 26 in a perpendicular direction relative to an installation surface of the bobbin introduction section 22. The bobbin isolating member 41 is arranged along the area over which the bobbin plate 26 with the bobbin 9 riding thereon is driven, and isolates the bobbin 9 riding on each of the bobbin plates 26.

With this structure, the bobbins 9 are isolated while being transported in a vertical direction. Consequently, the device can be installed in a space that is compact in the horizontal direction. Furthermore, because the bobbin isolating members 41 are arranged along the direction in which the bobbins 9 are transported, more space can be procured for the isolation of the bobbins 9 without having to increase the installation space, and isolation failure can be reduced.

The bobbin isolating device 12 according to the present embodiment furthermore has the following structure. That is, the bobbin isolating member 41 can come into contact with the bobbin 9 riding on the bobbin plate 26 from the side of the bobbin 9 that is opposite to the scooping side of the bobbin plate 26. The bobbin isolating member 41 has the pushing portion 42 that is convex toward the scooping side of the bobbin plate 26. The pushing portion 42 restricts the number of the bobbins 9 that can ride on the bobbin plate 26.

The pushing portion 42 pushes the bobbins 9, causing the extra bobbins 9 to fall off the bobbin plate 26. In this manner, with a simple structure, the number of the bobbins 9 that can be carried on one bobbin plate 26 can be restricted and the bobbins 9 can be isolated one by one.

Furthermore, in the bobbin isolating device 12 according to the present embodiment, a plurality of the pushing portions 42 is formed along the direction in which the bobbin plate 26 with the bobbin 9 riding thereon is driven.

With this structure, isolation of the bobbins 9 can be performed a plurality of times without having to increase the installation space, and isolation failure can be reduced.

Furthermore, in the bobbin isolating device 12 according to the present embodiment, the bobbin isolating member 41 is a wire member, and the pushing portion 42 is formed by bending the wire member.

Because the bobbin isolating member 41 is formed from the wire member in this manner, no installation space for the bobbin isolating member 41 is required, and a structure that is lightweight can be realized.

Furthermore, in the bobbin isolating device 12 according to the present embodiment, the bobbin plate 26 has the slits 40, and the bobbin isolating members 41 pass through the slits 40.

With this structure, the bobbin isolating members 41 can be made to come into contact with the bobbins 9 being transported on the bobbin plates 26.

The bobbin isolating device 12 according to the present embodiment furthermore has the following structure. That is, the endless loop belt 25 is a sheet-like member stretched over the two rotary rollers 37 and 37, which have parallel rotation axes, to form a loop. The bobbin 9 rides on the bobbin plate 26 in a direction parallel to the rotation axes of the rotary rollers 37. A plurality of the bobbin isolating members 41 is provided in a width direction of the sheet-like member.

By having the endless loop belt 25 that is sheet-like, the bobbins 9 riding on the bobbin plates 26 are prevented from falling off on the back side (on the endless loop belt 25 side) of the device. Furthermore, by virtue of the sheet-like endless loop belt 25, the bobbin plates 26 are stably attached to the endless loop belt 25.

Furthermore, in the bobbin isolating device 12 according to the present embodiment, the driving source 38 that drives the rotary roller 37 is a stepping motor.

With this structure, even if the endless loop belt 25 halts due to the bobbins 9 getting jammed in the bobbin picking section 23, damage to the motor or the device can be prevented because the stepping motor loses steps.

In the bobbin isolating device 12 according to the present embodiment, when jamming of the bobbins 9 in the bobbin picking section 23 is detected, the driving source 38 is driven in the reverse direction.

By driving the driving source 38 in the reverse direction, the jamming of the bobbins 9 can be quickly broken up.

The automatic winder 10 according to the present embodiment includes the bobbin isolating device 12 described above and a plurality of the not shown winder units. The bobbin isolating device 12 individually isolates the bobbins 9 with the yarn spun by the spinning machine wound thereon to be delivered to each of the winding units.

That is, by having the bobbin isolating device 12 according to the present invention to perform the preparation for the delivery of the bobbins 9 to the winder units, the automatic winder can be made compact overall.

Another embodiment is explained next. In this embodiment, parts that are identical or similar to those in the first embodiment have been assigned the same reference symbols, and the explanation thereof is omitted. The bobbin isolating device 12 according to this embodiment separates the bobbins 9 based on the amount of yarn wound thereon.

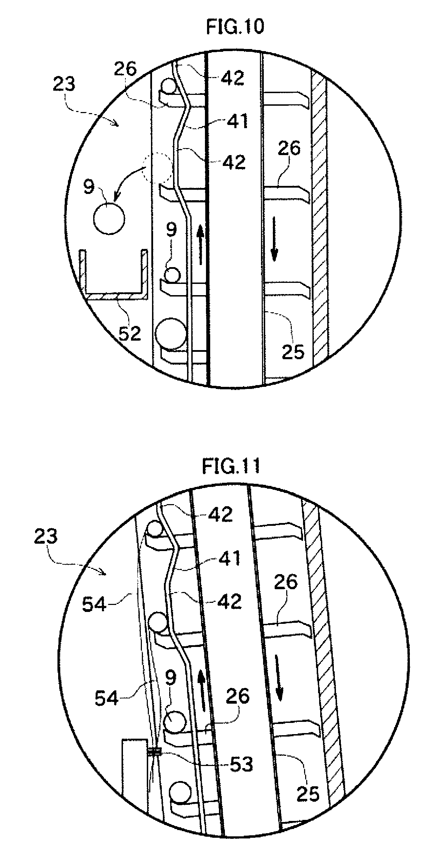

That is, because the pushing portions 42 of the bobbin isolating members 41 push the bobbins 9 riding on the bobbin plates 26 toward the scooping side of the bobbin plates 26 by a pre-determined amount, as shown in FIG. 10, the bobbins 9 that are of a specific diameter or above fall off the bobbin plates 26, and only the bobbins 9 that are of a diameter shorter than the pre-determined diameter are left on the bobbin plates 26. Logically, the bobbins 9 that have more yarn wound thereon have a larger diameter and those that have less yarn wound thereon have a smaller diameter. Therefore, the bobbins 9 with more than a predetermined amount of yarn wound thereon are caused to fall off the bobbin plates 26 by the bobbin isolating members 41, leaving only the bobbins 9 with less than or equal to the predetermined amount of yarn wound thereon on the bobbin plates 26. That is, the amount of yarn wound on the bobbin 9 that can ride on the bobbin plates 26 is restricted by the bobbin isolating members 41.

In the present embodiment, if the bobbins 9 that are caused to fall off the bobbin plate 26 by the bobbin isolating members 41 (the bobbins 9 that have a larger diameter, that is, the bobbins with more than the predetermined amount of yarn wound thereon) fall to reach up to the guiding member 30, the bobbins 9 will perpetually be circulating between the guiding member 30 and the bobbin plate 26 and accumulate there. In view of this, in the present embodiment, a bobbin container 52 is arranged above the guiding member 30 to catch the bobbins 9 that fall off the bobbin plate 26. Consequently, the bobbins 9 with more than the predetermined amount of yarn wound thereon fall into the bobbin container 52, and the bobbins 9 with less than or equal to the predetermined amount of yarn wound thereon are transported upward on the bobbin plate 26. With this structure, the bobbins 9 are isolated based on the amount of yarn wound thereon.

Furthermore, the bobbin isolating members 41 are arranged in a replaceable manner. For example, the bobbin isolating members 41 having the pushing portion 42 of a plurality of different jutting amounts can be kept ready, and by using appropriate bobbin isolating members 41, the jutting amount of the pushing portion 42 can be changed easily. By changing the jutting amount of the pushing portion 42, the bobbin 9 with how much yarn wound thereon should ride on the bobbin plate 26 can be controlled. Consequently, the bobbins 9 with the desired amount of yarn wound thereon can be isolated by the bobbin isolating member 41.

The automatic winder 10 that includes the bobbin isolating device 12 according to the present embodiment is explained next. In the embodiment explained above, the bobbin isolating device 12 is used for delivering the bobbins 9 to each of the winder units. In the present embodiment, the bobbin isolating device 12 is used for separating the bobbins 9 ejected from the winder units based on the amount of yarn wound thereon. The yarns from the bobbins 9 are unwound in the winder units and therefore, the bobbins 9 ejected from the winder units are usually empty. However, sometimes the bobbins 9 ejected from the winder units can have yarn wound thereon and, among such cases, it is preferable that the bobbins 9 having more amount of yarn wound thereon be recovered and reused.

In view of this, in the automatic winder 10 according to the present embodiment, the bobbins 9 with more amount of yarn wound thereon and the bobbins 9 with almost no yarn wound thereon (or empty bobbins with no yarn left thereon) are isolated by the bobbin isolating device 12. With this structure, the bobbins 9 with more amount of yarn wound thereon can be easily recovered and reused.

The automatic winder 10 according to the present embodiment includes an ejected-bobbin transporting section that transports the bobbins 9 ejected from each of the winder units to the bobbin isolating device 12. The bobbin isolating device 12 according to the present embodiment is arranged at the end of the ejected-bobbin transporting section in the transport direction of the bobbins 9. The bobbins 9 transported by the ejected-bobbin transporting section are introduced into the bobbin introduction section 22. Because the bobbins 9 ejected from the winder units are automatically introduced into the bobbin isolating device 12 with this structure, isolation of the bobbins 9 with the yarn wound thereon is performed automatically.

In the present embodiment, a magazine-type bobbin delivering device is used for delivering the bobbins 9 to each of the winder units. Because the magazine-type bobbin delivering device is compact, the automatic winder 10 can be made compact overall.

As explained above, the bobbin isolating device 12 according to the present embodiment has the following structure. That is, the bobbin isolating members 41 can come into contact with the bobbins 9 riding on the bobbin plates 26 from the side of the bobbins 9 that is opposite to the scooping side of the bobbin plates 26. The bobbin isolating members 41 have the pushing portions 42 that are convex toward the scooping side of the bobbin plates 26. The pushing portions 42 restrict the amount of yarn wound on the bobbins 9 that can ride on the bobbin plate 26.

Because the pushing portions 42 push the bobbins 9 riding on the bobbin plates 26, bobbins 9 with a larger diameter (the bobbins 9 with more amount of yarn wound thereon) are caused to fall off the bobbin plates 26, and the bobbins 9 with a smaller diameter (the bobbins 9 with less amount of yarn wound thereon, or empty bobbins 9 with no yarn wound thereon) remain on the bobbin plates 26. Therefore, with a simple structure, the amount of yarn wound on the bobbin 9 riding on the bobbin plate 26 can be restricted, and the bobbins 9 can be isolated based on the amount of yarn wound thereon.

The automatic winder 10 according to the present embodiment includes the bobbin isolating device 12 and a plurality of the winder units. The bobbin isolating device 12 separates the bobbins 9 ejected from the winder units based on the amount of yarn wound thereon.

With this structure, the bobbins 9 ejected from the winder units can be easily separated based on the amount of yarn wound thereon with a simple structure.

Furthermore, the automatic winder according to the present embodiment includes an ejected-bobbin transporting section that transports the bobbins 9 ejected from the winder units. Each of the winder units has the magazine-type bobbin delivering device. The bobbin isolating device 12 is arranged at the end of the ejected-bobbin transporting section in the transport direction.

With this structure, the bobbins 9 ejected from the magazine-type automatic winder are automatically separated.

Still another embodiment of the present invention is explained next. That is, in the embodiments explained above, the bobbin plates 26 transport the bobbins 9 in the vertical direction. However, the bobbins 9 need not be transported strictly vertically; the bobbins 9 can be transported substantially vertically. As shown in FIG. 11, in the bobbin isolating device 12 according to the present embodiment, the transport direction of the bobbins 9 by the conveyor is slightly slanting relative to the installation surface of the device. Specifically, the endless loop belt 25 drives the bobbin plate 26 in a direction that is slanting relative to the vertical direction. Thus, even if the transport direction of the bobbins 9 by the bobbin plates 26 is slightly slanting, the bobbins 9 can be isolated without any difficulty.

Among the bobbins 9 being transported by the bobbin plates 26, there can be bobbins 9 with the yarns unwound (that is, with yarns 54 coming out of the bobbins 9). When such bobbins 9 with the unwound yarns 54 are being transported upward on the bobbin plates 26, as shown in FIG. 11, the yarns 54 hang down from the bobbin plates 26. If the bobbins 9 are delivered to the tray placement section 24 with the yarns 54 hanging down, the yarns 54 can get entangled with each other inside the tray placement section 24.

In view of this, in the present embodiment, a cutter 53 is arranged in the bobbin picking section 23 for cutting the yarns 54 coming out of the bobbins 9 riding on the bobbin plates 26. Because in the present embodiment the bobbins 9 are transported by the bobbin plates 26 in a slanting direction, the cutter 53 can be arranged below the path along which the bobbins 9 are transported. With this structure, the yarns 54 that are hanging from the bobbin plates 26 can be easily introduced to the cutter 53.

As explained above, the bobbin isolating device 12 according to the present embodiment has the following structure. That is, the endless loop belt 25 drives the bobbin plates 26 in a direction that is slanting relative to the installation surface of the bobbin introduction section 22. The bobbin picking section 23 includes the cutter 53 that cuts the yarns 54 that have unwound from the bobbins 9 being transported on the bobbin plates 26.

By cutting the yarns 54 coming out of the bobbins 9, tangling of the yarns 54 can be prevented. Because the bobbins 9 are transported by the bobbin plates 26 in a slanting direction as explained above, the yarns 54 that have unwound from the bobbins 9 are easily introduced to the cutter 53.

The exemplary embodiments of the present invention are explained so far. However, various modifications can be made.

The detecting section need not be limited to the non-contact type bobbin sensor 49 but can be a contact type sensor that detects the presence or absence of the bobbins 9 in the guiding member 30.

In the present embodiment, the pivoting member 31 is maintained in the posture in which the upper surface of the transporting plate 32 faces the guiding member 30 when the bobbin sensor 49 detects the presence of the bobbins 9. Alternatively, the pivoting member 31 can be maintained in the posture in which the transporting plate 32 with the bobbins 9 riding thereon is held substantially horizontal. By keeping the bobbins 9 ready on the pivoting member 31 in this manner, the bobbins 9 can be promptly transported to the guiding member 30 when the bobbin sensor 49 detects absence of the bobbins 9 in the guiding member 30.

The bobbin gathering member need not be limited to the inclined bottom surface of the guiding member 30 as described in the present embodiment. A pushing member that pushes the bobbin 9 toward the bobbin picking section 23 can be arranged to cause the bobbins 9 to crowd toward the bobbin picking section 23.

The bobbin isolating member 41 is not limited to the metal wire used in the present embodiment but can be a plate-like member.

When using the bobbin isolating members 41 to restrict the amount of yarn wound on the bobbins 9 that can ride on the bobbin plates 26, the bobbin isolating members 41 having the pushing portions 42 of a plurality of different jutting amounts can be used. By having different jutting amounts of the pushing portions 42, the bobbins 9 of what diameter should be caused to fall from the bobbin plates 26 by the pushing portions 42 can be controlled. That is, with this structure, the bobbins 9 can be isolated into three or more categories based on the amount of yarn.

The bobbin isolating device 12 can be used for delivering bobbins in other types of textile machines apart from the automatic winder.

A bobbin isolating device according to an aspect of the present invention has the following structure. That is, the bobbin isolating device includes a bobbin introduction section that receives a plurality of bobbins and a bobbin picking section that picks up the bobbin from a pile of the bobbins introduced into the bobbin introduction section. The bobbin picking section includes a plurality of bobbin receiving members, a bobbin-receiving-member driving section, and a bobbin isolating member. The bobbin receiving member can carry the bobbins. The bobbin-receiving-member driving section drives the bobbin receiving members in a substantially perpendicular direction relative to an installation surface of the bobbin introduction section. The bobbin isolating member is arranged along an area over which the bobbin receiving members with the bobbins riding thereon are driven, and isolates the bobbin riding on the bobbin receiving members.

With this structure, the bobbin can be transported and isolated substantially vertically, and therefore, the device can be installed in a space that is compact in a horizontal direction. Furthermore, because the bobbin isolating member is arranged along a direction in which the bobbins are transported, more space can be procured for the isolation of the bobbins without having to increase the installation space, and isolation failure can be reduced.

In the bobbin isolating device described above, it is preferable that the bobbin-receiving-member driving section drive the bobbin receiving members in a perpendicular direction relative to the installation surface of the bobbin introduction section.

With this structure, the bobbins can be isolated by transporting vertically, and therefore, the device can be installed in a space that is compact in the horizontal direction.

The bobbin isolating device described above can also have the following structure. That is, the bobbin-receiving-member driving section drives the bobbin receiving members in a direction that is slanting relative to the installation surface of the bobbin introduction section. The bobbin picking section includes a cutter to cut a yarn that has unwound from a bobbin riding on the bobbin receiving member.

By cutting the yarns coming out of the bobbins in this manner, tangling of the yarns is prevented. With the above structure, because the bobbins are transported by the bobbin receiving members in the slanting direction, the yarns unwound from the bobbins can be easily introduced to the cutter.

The bobbin isolating device described above has the following structure. That is, the bobbin isolating member can come into contact with a bobbin riding on the bobbin receiving member from a side of the bobbin receiving member that is opposite to a scooping side of the bobbin receiving member. The bobbin isolating member has a pushing portion that is convex toward the scooping side of the bobbin receiving member. The bobbin isolating member restricts number of bobbins that can ride on the bobbin receiving member with the pushing portion.

The pushing portion pushes the bobbin riding on the bobbin receiving members, causing extra bobbins to fall off the bobbin receiving members. With such a simple structure, the number of the bobbins riding on each of the bobbin receiving members can be restricted, and therefore, the bobbins can be isolated one by one.

In the bobbin isolating device described above, it is preferable that the bobbin receiving member has a plurality of the pushing portions formed in a direction in which the bobbin receiving members with the bobbins riding thereon are driven.

Thus, isolation of the bobbins can be performed multiple times without having to increase an installation space, and therefore, isolation failure can be reduced.

In the bobbin isolating device described above, the bobbin isolating member is a wire member and it is preferable that the pushing portion be formed by bending the wire member.

Because the bobbin isolating member is formed from the wire member in this manner, no installation space for the bobbin isolating member is required, and a structure that is lightweight can be realized.

In the bobbin isolating device described above, slits are formed in the bobbin receiving members and it is preferable that the wire members be arranged so as to pass through the slits of the bobbin receiving members.

With this structure, the bobbin isolating member can be made to come into contact with the bobbins that are being transported on the bobbin receiving members.

It is preferable that the bobbin isolating device described above has the following structure. That is, the bobbin-receiving-member driving section is a sheet-like member that is stretched over at least two rotary rollers having parallel rotation axes to form a loop. The bobbin receiving members have a structure such that the bobbins ride on the bobbin receiving members in a direction parallel to the rotation axes of the rotary rollers. A plurality of the wire members is arranged in a width direction of the sheet-like member.

Because the bobbin-receiving-member driving section is sheet-like, the bobbins riding on the bobbin receiving members are prevented from falling off on a back side (on a sheet-like member side) of the device. Furthermore, the bobbin receiving members can be stably attached to the bobbin-receiving-member driving section.

The bobbin isolating device described above includes a driving source that drives at least one of the rotary rollers. It is preferable that the driving source be a stepping motor.

With this structure, even if the bobbin-receiving-member driving section halts due to jamming of the bobbins in the bobbin picking section, damage to the motor or the device can be prevented because the stepping motor appropriately loses steps.

In the bobbin isolating device described above, when jamming of the bobbin in the bobbin picking section is detected, it is preferable that the driving source be driven in a reverse direction.

By driving the driving source in the reverse direction, the jamming of the bobbins can be quickly broken up.

An automatic winder according to another aspect of the present invention has the following structure. That is, the automatic winder includes the above-described bobbin isolating device and a plurality of winder units. The bobbin isolating device isolates yarn-wound bobbins one by one that are spun by a spinning machine, and delivers the isolated bobbins to each of the winder units.

That is, by using the bobbin isolating device according to the present invention to perform the preparation for the delivery of the bobbin to the winder unit, the automatic winder can be made compact overall.

## Claims

1. A bobbin isolating device (12) comprising:
a bobbin introduction section (22) that receives a plurality of bobbins; and
a bobbin picking section (23) that picks up the bobbin from a pile of the bobbins introduced into the bobbin introduction section (22),
wherein the bobbin picking section (23) includes
a plurality of bobbin receiving members (26) on which the bobbins can ride,
a bobbin-receiving-member driving section (25) that drives the bobbin receiving members(26) in a substantially perpendicular direction relative to an installation surface of the bobbin introduction section (22), and
a bobbin isolating member (41) that is arranged along an area over which the bobbin receiving members (26) with the bobbins riding thereon are driven, and that isolates the bobbins riding on the bobbin receiving members (26), **characterized in that**
the bobbin isolating member (41) can come into contact with a bobbin riding on the bobbin receiving member (26) from a side of the bobbin receiving member (26) that is opposite to a scooping side of the bobbin receiving member (26), and
the bobbin isolating member (41) has a pushing portion (42) that is convex toward the scooping side of the bobbin receiving member (26), and restricts number of bobbins that can ride on the bobbin receiving member with the pushing portion (42), so that if two or more bobbins riding one on top of another on a bobbin receiving member (26) reach the position of the pushing portion (42), the bobbins are pushed toward the scooping side of the bobbin receiving member (26) so that an extra bobbin is dropped from the bobbin receiving member (26) and the number of the bobbins that can ride on the bobbin receiving member (26) is restricted to one.

2. The bobbin isolating device(12) according to Claim 1, wherein the bobbin-receiving-member driving section (25) drives the bobbin receiving members(26) in the perpendicular direction relative to the installation surface of the bobbin introduction section (22).

3. The bobbin isolating device(12) according to Claim 1, wherein
the bobbin-receiving-member driving section (25) drives the bobbin receiving members (26) in a direction that is slanting relative to the installation surface of the bobbin introduction section (22), and
the bobbin picking section (23) includes a cutter(53) to cut a yarn that has unwound from a bobbin riding on the bobbin receiving member (26).

4. The bobbin isolating device (12) according to Claim 1, wherein the bobbin receiving member (26) has a plurality of the pushing portions (42) formed in a direction in which the bobbin receiving members (26) with the bobbins riding thereon are driven.

5. The bobbin isolating device(12) according to any one of Claims 1 to 4, wherein
the bobbin isolating member (41) is a wire member, and
the pushing portion (42) is formed by bending the wire member.

6. The bobbin isolating device(12) according to Claim 5, wherein a slit is formed in the bobbin receiving members (26), and the wire member is arranged so as to pass through the slits of the bobbin receiving members.

7. The bobbin isolating device(12) according to Claim 5 or 6, wherein
the bobbin-receiving-member driving section (25) is a sheet-like member stretched over at least two rotary rollers having parallel rotation axes to form a loop,
the bobbin receiving member (26) has a structure such that bobbin rides thereon in a direction parallel to the rotation axes of the rotary rollers, and
a plurality of the wire members is arranged in a width direction of the sheet-like member.

8. The bobbin isolating device(12) according to Claim 7, further comprising:
a driving source (38) that drives at least one of the rotary rollers,
wherein the driving source is a stepping motor.

9. The bobbin isolating device(12) according to Claim 8, wherein
the driving source (38) is driven in a reverse direction when jamming of the bobbin in the bobbin picking section is detected.

10. An automatic winder comprising:
the bobbin isolating device (12) according to any one of Claims 1 to 9; and
a plurality of winder units,
wherein the bobbin isolating device(12) isolates yarn-wound bobbins one by one that are spun by a spinning machine, and delivers the isolated bobbins to each of the winder units.

## Patentansprüche

1. Spulenvereinzelungsvorrichtung (12), enthaltend:
einen Spuleneinführabschnitt (22), der eine Vielzahl von Spulen empfängt; und
einen Spulenaufnahmeabschnitt (23), der die Spule von einem Stapel der in den Spuleneinführabschnitt (22) eingeführten Spulen aufnimmt,
wobei der Spulenaufnahmeabschnitt (23) enthält:
eine Vielzahl von Spulenaufnahmeelementen (26), auf welchen die Spulen mitgeführt werden können,
einen Spulenaufnahmeelement-Antriebsabschnitt (25), der die Spulenaufnahmeelemente (26) in einer bezogen auf eine Einbaufläche des Spuleneinführabschnitts (22) im Wesentlichen senkrechten Richtung antreibt, und
ein Spulenvereinzelungselement (41), das entlang einem Bereich angeordnet ist, über welchen die Spulenaufnahmeelemente (26) mit darauf mitgeführten Spulen angetrieben werden, und welches die auf den Spulenaufnahmeelementen (26) mitgeführten Spulen vereinzelt, **dadurch gekennzeichnet, dass**
das Spulenvereinzelungselement (41) mit einer auf dem Spulenaufnahmeelement (26) mitgeführten Spule von einer Seite des Spulenaufnahmeelements (26) in Berührung kommen kann, die einer Aufnahmeseite des Spulenaufnahmeelements (26) entgegengesetzt ist, und
das Spulenvereinzelungselement (41) einen Schieberteil (42) hat, der zu der Aufnahmeseite des Spulenaufnahmeelements (26) hin konvex ist und die Anzahl der Spulen, die auf dem Spulenaufnahmeelement mitgeführt werden können, mit dem Schieberteil (42) beschränkt, sodass dann, wenn zwei oder mehr Spulen, die auf einem Spulenaufnahmeelement (26) übereinander mitgeführt werden, die Position des Schieberteils (42) erreichen, die Spulen zu der Aufnahmeseite des Spulenaufnahmeelements (26) hin geschoben werden, sodass eine zusätzliche Spule von dem Spulenaufnahmeelement (26) herabfällt und die Anzahl der Spulen, die auf dem Spulenaufnahmeelement (26) mitgeführt werden können, auf eins beschränkt ist.

2. Spulenvereinzelungsvorrichtung (12) nach Anspruch 1, wobei der Spulenaufnahmeelement-Antriebsabschnitt (25) die Spulenaufnahmeelemente (26) in der senkrechten Richtung bezogen auf die Einbaufläche des Spuleneinführabschnitts (22) antreibt.

3. Spulenvereinzelungsvorrichtung (12) nach Anspruch 1, wobei der Spulenaufnahmeelement-Antriebsabschnitt (25) die Spulenaufnahmeelemente (26) in einer Richtung antreibt, die bezogen auf die Einbaufläche des Spuleneinführabschnitt (22) schräg ist, und
der Spulenaufnahmeabschnitt (23) eine Schneideinrichtung (53) aufweist, um ein Garn abzuschneiden, das sich von einer auf dem Spulenaufnahmeelement (26) mitgeführten Spule gelöst hat.

4. Spulenvereinzelungsvorrichtung (12) nach Anspruch 1, wobei das Spulenaufnahmeelement (26) eine Vielzahl der Schiebeteile (42) aufweist, die in einer Richtung gebildet sind, in welcher die Spulenaufnahmeelemente (26) mit den darauf mitgeführten Spulen angetrieben werden.

5. Spulenvereinzelungsvorrichtung (12) nach einem der Ansprüche 1 bis 4, wobei
das Spulenvereinzelungselement (41) ein Drahtelement ist und
der Schieberteil (42) durch Biegen des Drahtelements gebildet ist.

6. Spulenvereinzelungsvorrichtung (12) nach Anspruch 5, wobei in den Spulenaufnahmenelementen (26) ein Schlitz gebildet ist und das Drahtelement so angeordnet ist, dass es durch die Schlitze der Spulenaufnahmeelemente läuft.

7. Spulenvereinzelungsvorrichtung (12) nach Anspruch 5 oder 6, wobei
der Spulenaufnahmeelement-Antriebsabschnitt (25) ein bahnartiges Element ist, welches über mindestens zwei Drehrollen, die parallele Drehachsen aufweisen, gespannt ist, sodass es eine Schleife bildet,
das Spulenaufnahmeelement (26) einen solchen Aufbau hat, dass die Spule darauf in einer zu den Drehachsen der Drehrollen parallelen Richtung mitgeführt wird, und
eine Vielzahl der Drahtelemente in Richtung der Breite des bahnartigen Elements angeordnet ist.

8. Spulenvereinzelungsvorrichtung (12) nach Anspruch 7, ferner enthaltend:
eine Antriebsquelle (38), die mindestens eine der Drehrollen antreibt,
wobei die Antriebsquelle ein Schrittmotor ist.

9. Spulenvereinzelungsvorrichtung nach Anspruch 8, wobei die Antriebsquelle (38) in einer Rückwärtsrichtung angetrieben wird, wenn ein Blockieren der Spule in dem Spulenaufnahmeabschnitt erfasst wird.

10. Spulautomat, enthaltend:
die Spulenvereinzelungsvorrichtung (12) nach einem der Ansprüche 1 bis 9; und
eine Vielzahl von Spulstellen,
wobei die Spulenvereinzelungsvorrichtung (12) mit Garn bewickelte Spulen, die von einer Spinnmaschine besponnen wurden, vereinzelt und jeder der Spulstellen die vereinzelten Spulen zuführt.

## Revendications

1. Dispositif d'isolation de bobine (12) comprenant :
une section d'introduction de bobine (22) qui reçoit une pluralité de bobines ; et
une section de saisie de bobine (23) qui saisit la bobine d'une pile de bobines introduites dans la section d'introduction de bobine (22),
dans lequel la section de saisie de bobine (23) inclut une pluralité d'éléments de réception de bobine (26), sur lesquels les bobines peuvent passer,
une section d'entraînement d'élément de réception de bobine (25) qui entraîne les éléments de réception de bobine (26) dans une direction sensiblement perpendiculaire par rapport à une surface d'installation de la section d'introduction de bobine (22) ; et
un élément d'isolation de bobine (41) qui est agencé le long d'une zone sur laquelle les éléments de réception de bobine (26) avec les bobines passant dessus sont entraînés, et qui isole les bobines passant sur les éléments de réception de bobine (26), **caractérisé en ce que**
l'élément d'isolation de bobine (41) peut venir en contact avec une bobine passant sur l'élément de réception de bobine (26) d'un côté de l'élément de réception de bobine (26) qui est opposé à un côté de prélèvement de l'élément de réception de bobine (26) et l'élément d'isolation de bobine (41) présente une partie de poussée (42) qui est convexe vers le côté de prélèvement de l'élément de réception de bobine (26) et restreint le nombre de bobines qui peuvent passer sur l'élément de réception de bobine avec la partie de poussée (42), de sorte que si deux bobines ou plus passant sur le dessus l'une de l'autre sur un élément de réception de bobine (26) atteignent la position de la partie de poussée (42), les bobines soient poussées vers le côté de prélèvement de l'élément de réception de bobine (26) de sorte qu'une bobine supplémentaire soit relâchée de l'élément de réception de bobine (26) et le nombre de bobines qui peuvent passer sur l'élément de réception de bobine (26) soit restreint à un.

2. Dispositif d'isolation de bobine (12) selon la revendication 1, dans lequel la section d'entraînement d'élément de réception de bobine (25) entraîne les éléments de réception de bobine (26) dans la direction perpendiculaire par rapport à la surface d'installation de la section d'introduction de bobine (22).

3. Dispositif d'isolation de bobine (12) selon la revendication 1, dans lequel la section d'entraînement d'élément de réception de bobine (25) entraîne les éléments de réception de bobine (26) dans une direction qui est inclinée par rapport à la surface d'installation de la section d'introduction de bobine (22) et
la section de saisie de bobine (23) inclut un couteau (53) pour couper un fil qui s'est déroulé d'une bobine passant sur l'élément de réception de bobine (26).

4. Dispositif d'isolation de bobine (12) selon la revendication 1, dans lequel l'élément de réception de bobine (26) présente une pluralité de parties de poussée (42) formées dans une direction dans laquelle les éléments de réception de bobine (26) avec les bobines passant dessus sont entraînées.

5. Dispositif d'isolation de bobine (12) selon l'une quelconque des revendications 1 à 4, dans lequel l'élément d'isolation de bobine (41) est un élément fil et
la partie de poussée (42) est formée par pliage de l'élément fil.

6. Dispositif d'isolation de bobine (12) selon la revendication 5, dans lequel une fente est formée dans les éléments de réception de bobine (26) et l'élément fil est agencé de sorte à passer par les fentes des éléments de réception de bobine.

7. Dispositif d'isolation de bobine (12) selon la revendication 5 ou 6, dans lequel
la section d'entraînement d'élément de réception de bobine (25) est un élément de type feuille étiré sur au moins deux rouleaux rotatifs présentant des axes de rotation parallèles pour former une boucle,
l'élément de réception de bobine (26) présente une structure telle que la bobine passe dessus dans une direction parallèle aux axes de rotation des rouleaux rotatifs et
une pluralité des éléments fils est agencée dans une direction de largeur de l'élément de type feuille.

8. Dispositif d'isolation de bobine (12) selon la revendication 7, comprenant en outre :
une source d'entraînement (38) qui entraîne au moins un des rouleaux rotatifs,
dans lequel la source d'entraînement est un moteur pas-à-pas.

9. Dispositif d'isolation de bobine (12) selon la revendication 8, dans lequel
la source d'entraînement (38) est entraînée dans une direction inverse lorsque le bourrage de la bobine dans la section de prélèvement de bobine est détecté.

10. Enrouleur automatique comprenant :
le dispositif d'isolation de bobine (12) selon l'une quelconque des revendications 1 à 9 ; et
une pluralité d'unités enrouleuses,
dans lequel le dispositif d'isolation de bobine (12) isole des bobines d'enroulement de fils une par une qui sont filées par un métier à filer et fournit les bobines isolées à chacune des unités enrouleuses.
